# EUROPÄISCHE PATENTSCHRIFT

(11) **EP 2 957 436 B1**
(45) Veröffentlichungstag und Bekanntmachung des Hinweises auf die Patenterteilung: **14.06.2017**
(21) Anmeldenummer: 15162149.7
(22) Anmeldetag: 01.04.2015
(51) Int. Cl.: B60C 9/18, B29D 30/16, B60C 9/00, B60C 9/20, B60C 9/22, B60C 9/12, B29D 30/38, B29D 30/30

(54) **FESTIGKEITSTRÄGERSTREIFEN FÜR EINE FESTIGKEITSTRÄGERLAGE FÜR ELASTOMERE ERZEUGNISSE, INSBESONDERE FÜR FAHRZEUGLUFTREIFEN, SOWIE FESTIGKEITSTRÄGERLAGE UND FAHRZEUGLUFTREIFEN**
STRENGTH SUPPORT STRIP FOR A STABILITY BEAM BEARING MADE FOR ELASTOMERIC PRODUCTS, IN PARTICULAR FOR VEHICLE TYRES, AND STABILITY BEAM BEARING AND PNEUMATIC TYRE FOR A VEHICLE
BANDES SUPPORTS DE RENFORT POUR UNE COUCHE SUPPORT DE RENFORT POUR DES PRODUITS EN ÉLASTOMÈRE, EN PARTICULIER POUR DES PNEUS DE VÉHICULE, ET COUCHE SUPPORT DE RENFORT ET PNEUS DE VÉHICULE

(30) Priorität: 19.06.2014 DE 102014211790
(43) Veröffentlichungstag der Anmeldung: 23.12.2015
(73) Patentinhaber: Continental Reifen Deutschland GmbH, 30165 Hannover (DE)
(72) Erfinder: Justine, Carole, 31535 Scharrel (DE); Kramer, Thomas, 32049 Herford (DE); Wahl, Günter, 31249 Hohenhameln (DE); Pöhler, Ute, 30900 Wedemark (DE); Silva, Ricardo, 30165 Hannover (DE)
(74) Vertreter: Finger, Karsten

(56) Entgegenhaltungen:
- EP-A1- 0 571 802
- EP-A1- 2 765 333
- EP-A1- 2 781 369
- WO-A1-2012/168007

## Beschreibung

Die Erfindung betrifft einen Festigkeitsträgerstreifen, geeignet um zur Herstellung einer Festigkeitsträgerlage für elastomere Erzeugnisse, insbesondere für Fahrzeugluftreifen, mit mindestens zwei Windungen um eine Aufbaueinheit gewickelt oder gespult zu werden, wobei der Festigkeitsträgerstreifen zwei oder mehr Festigkeitsträger aufweist, welche innerhalb des Festigkeitsträgerstreifens parallel zueinander und parallel zur Längserstreckungsrichtung des Festigkeitsträgerstreifens angeordnet und mit Kautschukmaterial ummantelt sind. Weiter betrifft die Erfindung eine Festigkeitsträgerlage aufweisend einen solchen Festigkeitsträgerstreifen sowie einen Fahrzeugluftreifen aufweisend eine solche Festigkeitsträgerlage.

Festigkeitsträgerlagen für elastomere Erzeugnisse, insbesondere für Fahrzeugluftreifen, sind hinreichend bekannt. Ein Fahrzeugluftreifen radialer Bauart weist im Allgemeinen eine luftundurchlässige Innenschicht, eine Festigkeitsträger enthaltende Radialkarkasse, die vom Zenitbereich des Reifens über die Seitenwände bis in den Wulstbereich reicht und dort meist durch Umschlingen zugfester Wulstkerne verankert ist, einen radial außen befindlichen profilierten Laufstreifen und einen zwischen dem Laufstreifen und der Karkasse angeordneten Gürtel auf, welcher radial außen mit der Gürtelbandage abgedeckt ist. Die Gürtelbandage kann ein- oder mehrlagig ausgebildet sein und deckt zumindest die Gürtelränder ab. Die Gürtelbandage enthält üblicherweise parallel und im Wesentlichen in Umfangsrichtung verlaufende Festigkeitsträger, die in Gummi eingebettet sind. Bekannt und üblich ist es, dass die Festigkeitsträgerlage der Gürtelbandage dabei aus einem oder mehreren Festigkeitsträgerstreifen gebildet wird, welche auf einer Aufbautrommel auf den Gürtel gewickelt oder gespult werden. Jeder Festigkeitsträgerstreifen umfasst dabei zumindest zwei im Wesentlichen parallel zueinander angeordnete Festigkeitsträger, welche sich im Wesentlichen über die gesamte Länge des Festigkeitsträgerstreifens erstrecken und welche, z.B. durch Durchlaufen eines Kalanders oder eines Extruders, zusammen in eine unvulkanisierte Kautschukmischung eingebettete sind. Dies ermöglicht eine effiziente Herstellung der Festigkeitsträgerlage. Auch die Herstellung einer Festigkeitsträgerlage der Karkasse und/oder des Gürtels eines Fahrzeugluftreifens kann das Wickeln oder Spulen von einem oder mehreren Festigkeitsträgerstreifen um eine Aufbaueinheit umfassen. Das so geschaffene Gebilde aus Festigkeitsträgerstreifen wird einmal oder mehrmals von einem zum anderen axialen Rand des Gebildes durchtrennt. Aus einem solchen Verfahren resultierende Teile können einzeln oder zusammengefügt als Festigkeitsträgerlage für die Karkasse oder den Gürtel eines Fahrzeugluftreifens eingesetzt werden. Die der Festigkeitsträgerlage zugrunde liegenden Festigkeitsträgerstreifen werden als Bestandteil des Fahrzeugluftreifens vulkanisiert.

Es ist hierbei bekannt und üblich, insbesondere für die Karkasse und / oder den Gürtel und / oder die Gürtelbandage als Festigkeitsträger Garne oder Korde zu verwenden, welche einen im Wesentlichen runden Querschnitt aufweisen.

Die Reifenentwicklung geht dahin, Fahrzeugluftreifen mit geringem Rollwiderstand bereitzustellen. Es hat sich herausgestellt, dass die Höhe der Festigkeitsträgerlagen von Fahrzeugreifen, insbesondere der Festigkeitsträgerlagen von Karkasse, Gürtel oder Gürtelbandage, den Rollwiderstand des Fahrzeugluftreifens beeinflusst.

Aus der EP 2 205 452 B1 ist ein Fahrzeugluftreifen bekannt, dessen Festigkeitsträgerlage der Gürtelbandage und/oder der Karkasse mindestens einen flachen Festigkeitsträger aufweist. Die Höhe des Festigkeitsträgers ist hierbei geringer als die Höhe eines Festigkeitsträgers mit gleicher Querschnittsfläche aber rundem Querschnitt.

Die ein älteres Recht gemäß Art. 54(3) EPÜ bildende EP 2 765 333 A1 offenbart eine beispielsweise für eine Gürtelbandage vorgesehene Festigkeitsträgerlage, welche eine Vielzahl flacher Festigkeitsträger aufweist, die insbesondere aus Rayon, PEN oder PA 6.6 bestehen.

Aus der EP 2 781 369 A1, welche ebenfalls ein älteres Recht gemäß Art. 54(3) EPÜ darstellt, ist ebenfalls eine Festigkeitsträgerlage für eine Gürtelbandage bekannt. Die Festigkeitsträger sind Folien aus einem nicht metallischen Material, insbesondere aus PA 6.6, PEN oder Aramid.

Ein Fahrzeugluftreifen mit zwei Gürtellagen, welche Folien oder Bleche mit richtungsabhängigen Eigenschaften als Festigkeitsträger aufweisen, ist aus der EP 0 571 802 A1 bekannt. Die Folien oder Bleche sind derart angeordnet, dass sie schräg zur Umfangsrichtung verlaufen.

Aus der WO 2012/168007 A1 ist ein beispielsweise für eine Gürtellage geeigneter Festigkeitsträger bekannt, welcher aus mehreren aufeinander gestapelten flachen Stahlfilamenten besteht, wobei um die gestapelten Stahlfilamente ein weiteres im Querschnitt rundes Stahlfilament gewickelt ist.

Der Erfindung liegt die Aufgabe zugrunde, einen Festigkeitsträgerstreifen zur Herstellung einer Festigkeitsträgerlage für elastomere Produkte, insbesondere für Fahrzeugluftreifen, zur Verfügung zu stellen, welcher eine einfache und zuverlässige Herstellung der Festigkeitsträgerlage gewährleistet und welcher sich beim Einsatz der Festigkeitsträgerlage im Fahrzeugluftreifen durch einen verringerten Rollwiderstand des Fahrzeugluftreifens auszeichnet.

Gelöst wird die gestellte Aufgabe erfindungsgemäß dadurch, dass der Festigkeitsträgerstreifen eine Breite D von 0,3 mm bis 50 mm, bevorzugt eine Breite D von 0,5 mm bis 30 mm, besonders bevorzugt eine Breite D von 0,6 mm bis 18 mm, aufweist und zumindest einer der Festigkeitsträger ein flacher Festigkeitsträger ist, wobei der Querschnitt des flachen Festigkeitsträgers die Bedingung h < b erfüllt, wobei h die Höhe des Querschnitts und b die zur Höhe h orthogonale Breite des Querschnitts definiert und dass die Erstreckungsrichtung der Breite b in etwa parallel zur flächigen Erstreckung des Festigkeitsträgerstreifens angeordnet ist.

Bedeutend ist hierbei, dass der flache Festigkeitsträger innerhalb des Festigkeitsträgerstreifens so angeordnet ist, dass die Erstreckungsrichtung der Breite b des Festigkeitsträgers in etwa parallel zur flächigen Erstreckung des Festigkeitsträgerstreifens angeordnet ist. Hierdurch ist ein Festigkeitsträgerstreifen zur Verfügung gestellt, der mit einer geringeren Höhe ausführbar ist, insbesondere mit einer geringeren Höhe als ein Festigkeitsträgerstreifen mit einem Festigkeitsträger mit rundem Querschnitt aber gleicher Querschnittsfläche wie der flache Festigkeitsträger. Durch eine schraubenförmige Anordnung eines solchen Festigkeitsträgerstreifens durch Wickeln oder Spulen des Festigkeitsträgerstreifens um eine Aufbaueinheit kann eine Festigkeitsträgerlage hergestellt werden, die eine geringere Höhe aufweist, was vorteilhaft für Hysterese und Gewicht ist. Beim Einsatz in Fahrzeugluftreifen kann somit ein weiter verringerter Rollwiderstand erwirkt werden.

Das Wickeln oder Spulen von Festigkeitsträgerstreifen auf einer Aufbaueinheit ermöglicht eine einfache und zuverlässige Herstellung einer Festigkeitsträgerlage für elastomere Produkte, insbesondere einer Festigkeitsträgerlage für Fahrzeugluftreifen. Die Orientierung und der Abstand der Festigkeitsträger innerhalb des Festigkeitsträgerstreifens kann sehr zuverlässig bereits bei der Ummantelung der Festigkeitsträger zum Festigkeitsträgerstreifen eingestellt werden. Wichtig ist hierbei, dass die Orientierung der flachen Festigkeitsträger innerhalb des Festigkeitsträgerstreifens und somit innerhalb einer diesen Festigkeitsträgerstreifen beinhaltenden Festigkeitsträgerlage auf einfache Art und Weise sichergestellt werden kann. Die axiale Breite, über die der Festigkeitsträgerstreifen auf der Aufbaueinheit gewickelt oder gespult wird, kann flexibel an die Erfordernisse der herzustellenden Festigkeitsträgerlage angepasst werden.

Hierdurch ist ein Festigkeitsträgerstreifen zur Herstellung einer Festigkeitsträgerlage für elastomere Produkte, insbesondere für Fahrzeugluftreifen, zur Verfügung gestellt, welcher eine einfache und zuverlässige Herstellung der Festigkeitsträgerlage gewährleistet und welcher sich beim Einsatz der Festigkeitsträgerlage im Fahrzeugluftreifen durch einen verringerten Rollwiderstand des Fahrzeugluftreifens auszeichnet.

Vorteilhaft ist es, wenn alle Festigkeitsträger des Festigkeitsträgerstreifens flache Festigkeitsträger sind. Hierdurch kann ein Festigkeitsträgerstreifen mit einer besonders geringen Höhe zur Verfügung gestellt werden.

In einem bevorzugten Ausführungsbeispiel weist der flache Festigkeitsträger eine Folie auf. Der flache Festigkeitsträger kann ein Laminat aufweisend eine Folie oder genau eine Folie sein. Ein solcher flacher Festigkeitsträger ist ein besonders geeigneter Festigkeitsträger mit flachem Querschnitt für eine Festigkeitsträgerlage für elastomere Erzeugnisse, insbesondere für die Gürtelbandage und/oder die Karkasse und/oder den Gürtel von Fahrzeugluftreifen.

Ein weiterer hierzu besonders geeigneter flacher Festigkeitsträger ist durch ein zusammenhängendes Fadenbündel gebildet, welches eine Vielzahl an Fäden enthält, welche in etwa parallel zur Längserstreckung des flachen Festigkeitsträgers angeordnet sind und mittels eines Haftvermittlers zusammengehalten sind. Jeder Faden ist mit einem Haftvermittler verbunden und wird mittels dieses Haftvermittlers zumindest abschnittsweise mit anderen Fäden zu dem zusammenhängenden Fadenbündel zusammengehalten. Der Haftvermittler kann ein vernetzbares Harz, ein flüssiges thermoplastisches Harz, ein Wachs oder eine Substanz, welche mit elastomerem Material wechselwirken kann, sein. Zur Steigerung der Haftung zwischen Fäden und Haftimprägnierung ist es zweckmäßig, die Oberfläche der Fäden mechanisch, physikalisch und / oder chemisch zu aktivieren. Die Fäden sind nicht gezielt miteinander verdreht, sondern größtenteils zumindest abschnittsweise parallel angeordnet, wobei auch Kreuzungen von Fäden möglich sind. Die geringe Höhe h sowie die Breite b des zusammenhängenden Fadenbündels wird durch die Anordnung der Fäden, welche vorrangig in Erstreckungsrichtung der Breite b nebeneinander angeordnet sind, bewirkt.

Ein Beispiel für ein für die Erfindung geeignetes zusammenhängendes Fadenbündel ist unter dem Handelsnamen "Twaron Tape D2800" (Teijin Aramid) erhältlich. Es weist einen einzigen, aufgespreizten Aramidgarn auf, welcher mit einer Materialmatrix imprägniert und mittels dieser fixiert ist.

Ein "Faden" ist im Sinne der Anmeldung ein linienförmiges Gebilde, das sich im Wesentlichen über die gesamte Längserstreckung des zusammenhängenden Fadenbündels erstreckt. Ein Faden kann eine Endlosfaser oder ein Stapelfasergarn sein. Bevorzugt sind die Fäden des zusammenhängenden Fadenbündels Endlosfasern.

Im Sinne der Anmeldung sind eine "Vielzahl an Fäden" eine Anzahl von mindestens 20 Fäden. Zweckmäßig ist es, wenn ein loses Fadenbündel eine Anzahl von 25 bis 4500 Fäden, bevorzugt eine Anzahl von 450 bis 2000 Fäden, besonders bevorzugt eine Anzahl von 500 bis 1200 Fäden, aufweist.

Vorteilhaft ist es, wenn die Höhe h des flachen Festigkeitsträgers die Bedingung 1 µm < h < 1500 µm, bevorzugt 1 µm < h < 500 µm, besonders bevorzugt 1 µm < h < 350 µm, erfüllt. Der Fahrzeugluftreifen, der solche flachen Festigkeitsträger als Festigkeitsträger des Festigkeitsstreifens einer Festigkeitsträgerlage, insbesondere der Gürtelbandage, des Gürtels, und / oder der Karkasse, aufweist, ist besonders in Bezug auf den Rollwiderstand bei guten übrigen Eigenschaften des Reifens verbessert.

Entsprechende Vorteile ergeben sich, wenn das Verhältnis von Breite b zu Höhe h des flachen Festigkeitsträges die Bedingung 4000 > b / h > 1.5, insbesondere 200 > b / h > 3.5, insbesondere 19 > b / h > 6.5, erfüllt. Als zweckmäßig hat es sich auch herausgestellt, wenn die Breite b des flachen Festigkeitsträgers dabei die Bedingung 100 µm < b < 15000 µm, bevorzugt 500 µm < b < 5000 µm, erfüllt.

Die Feinheit der Festigkeitsträger im erfindungsgemäßen Festigkeitsträgerstreifen richtet sich nach dem Einsatzzweck und kann in einem sehr weiten Bereich variiert werden. Zweckmäßig ist es, wenn der flache Festigkeitsträger eine Feinheit von 50 bis 7000 dtex, bevorzugt von 500 bis 3500 dtex, besonders bevorzugt von 700 bis 1500 dtex, aufweist.

In einer bevorzugten Ausführungsform weist der Festigkeitsträgerstreifen einen flachen Festigkeitsträger aus nicht-metallischem Material, bevorzugt aus nicht-metallischem Material ausgewählt aus der nicht abgeschlossenen Gruppe gebildet aus Polyamid und/oder Polyester und/oder Rayon und/oder Aramid und/oder Polyoxadiazol und/oder Karbon und/oder Glas und/oder aus Mischungen und/oder aus Derivaten dieser Materialen, auf. Bevorzugt ist der flache Festigkeitsträger aus Aramid. Ein flacher Festigkeitsträger ist aus einem Material, wenn das Festigkeitsträgermaterial ganz oder teilweise aus diesem Material gebildet ist. Ein zusammenhängendes Fadenbündel ist aus einem Material, wenn Fäden des zusammenhängenden Fadenbündels aus diesem Material gebildet sind. Bevorzugt sind alle Fäden des zusammenhängenden Fadenbündels aus einem Material gebildet. Das zusammenhängende Fadenbündel kann aber auch Fäden aus unterschiedlichen Materialien aufweisen. Das Material kann je nach Einsatzzweck und Anforderung entsprechend gewählt werden.

Bei den Polyamiden (PA) kann es sich um die Polyamide PA 4.6, PA 4.10, PA 6, PA 6.6, PA 10.10, PA 11 und/oder PA12, bevorzugt um PA 4.10, PA 6.6 und/oder PA 10.10, handeln. Bei den Polyestern kann es sich um die Polyester Polyethylennaphthalat (PEN), Polyethylenfuranoat (PEF), Polybutylenterephthalat (PBT), Polybutylennaphttalat (PBN), Polypropylenterephthalat (PPT), Polypropylennaphthalat (PPN), Polyethylenterephthalat (PET) und/oder High-Modulus Low-Shrinkage-PET (HMLS-PET), insbesondere um thermoplastische Polyester und/oder vernetzte ungesättigte Polyester, handeln. Bevorzugt handelt es sich um PET und/oder PEN. Bei Aramid kann es sich um para-Aramid und/oder meta-Aramid und/oder para-Aramid-Copolymere, bevorzugt um para-Aramid, handeln. Aufzählungen, die "und/oder" enthalten, sind so zu verstehen, dass alle Glieder der Aufzählung mit und/oder gekoppelt sind.

Um eine zuverlässige Haftung der Festigkeitsträger zum elastomeren Material zu gewährleisten, ist es zweckmäßig, die Festigkeitsträger vor der Verarbeitung im Festigkeitsträgerstreifen gummifreundlich auszurüsten. Dies kann dadurch erfolgen, dass der Festigkeitsträger mit einer Haftimprägnierung, z.B. mit einem RFL-Dip im 1- oder 2-Bad-Verfahren, versehen wird.

Vorteilhaft ist es, wenn der Abstand benachbarter Festigkeitsträger des Festigkeitsträgerstreifens 0,01 mm bis 1,5 mm, bevorzugt 0,04 mm bis 1,2 mm, besonders bevorzugt 0,07 mm bis 0,8 mm, beträgt.

Als vorteilhaft für effizientes Wickeln oder Spulen des Festigkeitsträgerstreifens hat es sich herausgestellt, wenn der Festigkeitsträgerstreifen 2 bis 25, bevorzugt 2 bis 18, besonders bevorzugt 2 bis 10, flache Festigkeitsträger aufweist.

Ein besonders einfacher Festigkeitsträgerstreifen ergibt sich, wenn alle Festigkeitsträger gleich ausgebildet sind.

In einer anderen bevorzugten Ausführungsform weist der Festigkeitsträgerstreifen zumindest zwei Festigkeitsträger auf, die sich voneinander unterscheiden, bevorzugt die sich in ihrem Material und/oder in ihrem Aufbau und/oder in ihrem Querschnitt unterscheiden. Die Anordnung der unterschiedlichen Festigkeitsträger kann alternierend erfolgen. Durch die Verwendung unterschiedlicher Festigkeitsträger können die Vorteile der einzelnen Festigkeitsträger kombiniert und somit die Eigenschaften, beispielsweise bezüglich Rollwiderstand, Dehnbarkeit und/oder Festigkeit, gezielt eingestellt und optimiert werden. Zweckmäßig ist es, sich voneinander unterscheidende flache Festigkeitsträger in einem Festigkeitsträgerstreifen zu kombinieren. Als vorteilhaft hat sich eine Kombination aus flachen Festigkeitsträgern aus Aramid und flachen Festigkeitsträgern aus PA 6.6 oder PET oder eine Kombination aus flachen Festigkeitsträgern aus PET und flachen Festigkeitsträgern aus PEN erwiesen. Zweckmäßig ist es auch, wenn der Festigkeitsträgerstreifen einen flachen Festigkeitsträger sowie einen Festigkeitsträger mit rundem Querschnitt aufweist.

Die Erfindung betrifft ferner eine Festigkeitsträgerlage für elastomere Erzeugnisse, insbesondere für Fahrzeugluftreifen, aufweisend einen erfindungsgemäßen Festigkeitsträgerstreifen, welcher zur Herstellung der Festigkeitsträgerlage mit mindestens zwei Windungen auf eine Aufbaueinheit gewickelt oder gespult ist. Hierdurch ist auf einfache Art und Weise eine Festigkeitsträgerlage zur Verfügung gestellt, durch deren Einsatz im Fahrzeugluftreifen dessen Rollwiderstand reduzierbar ist.

Es kann ein Festigkeitsträgerstreifen um die Aufbaueinheit gewunden sein. Es können auch mehrere Festigkeitsträgerstreifen um die Aufbaueinheit gewunden sein, so dass axial benachbarte Windungen die Windungen unterschiedlicher Festigkeitsträgerstreifen sind. Die Windungen des oder der Festigkeitsträgerstreifen können beabstanded angeordnet oder ohne Abstand, d.h. berührend oder überlappend, insbesondere bis zu 30% der Breite des oder der Festigkeitsträgerstreifen überlappend, angeordnet sein.

Zweckmäßig ist es, wenn die Festigkeitsträgerlage durch den um die Aufbaueinheit gewundenen Festigkeitsträgerstreifen gebildet oder mitgebildet ist. Die Aufbaueinheit kann eine Aufbaueinheit mit bereits auf ihr angeordneten Bauteilen des elastomeren Produkts sein. Nach Aufbringung des Festigkeitsträgerstreifens und eventueller anderer Prozessschritte können die Bauteile des elastomeren Produkts zur weiteren Verarbeitung von der Bautrommel abgenommen werden. Eine solche Festigkeitsträgerlage eignet sich hervorragend als Gürtelbandage eines Fahrzeugluftreifens.

Das durch das Wickeln oder Winden des oder der Festigkeitsträgerstreifen geschaffene Gebilde kann aber auch einmal oder mehrmals von einem zum zweiten axialen Rand des Gebildes durchtrennt werden. Aus einem solchen Verfahren resultierende Teile können einzeln oder zusammengefügt als Festigkeitsträgerlage für elastomere Produkte eingesetzt werden. Eine solche Festigkeitsträgerlage eignet sich hervorragend für die Karkasse und/oder den Gürtel eines Fahrzeugluftreifens.

Die Erfindung betrifft ferner einen Fahrzeugluftreifen in Radialbauart mit einem Laufstreifen, einem mehrlagigen Gürtel, einer Gürtelbandage, einer Karkasse und mit Wulstbereichen, welcher in der Gürtelbandage und/oder dem Gürtel und/oder der Karkasse eine erfindungsgemäße Festigkeitsträgerlage aufweisend einen Festigkeitsträgerstreifen mit zumindest einem flachen Festigkeitsträger aufweist. Es handelt sich dabei vorzugsweise um einen PKW-Reifen oder um einen Nutzfahrzeugreifen.

Weitere Merkmale, Vorteile und Einzelheiten der Erfindung werden nun anhand der schematischen Zeichnungen, die Ausführungsbeispiele darstellen, näher erläutert. Dabei zeigt die
Fig. 1 einen Querschnitt eines erfindungsgemäßen Festigkeitsträgerstreifens,
Fig. 2 einen Querschnitt eines flachen Festigkeitsträgers,
Fig. 3 einen weiteren Querschnitt eines erfindungsgemäßen Festigkeitsträgerstreifens und
Fig. 4 einen Teilquerschnitt einer erfindungsgemäßen Festigkeitsträgerlage.

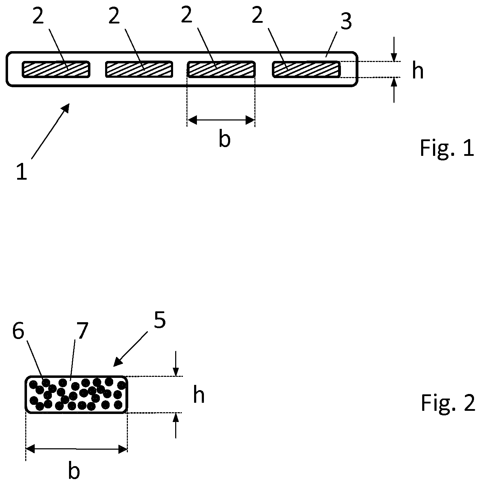

Die Fig. 1 zeigt einen Querschnitt eines im Rahmen der Erfindung einsetzbaren Festigkeitsträgerstreifens 1. Der Festigkeitsträgerstreifen 1 weist vier flache Festigkeitsträger 2 auf, welche innerhalb des Festigkeitsträgerstreifens 1 parallel zueinander und parallel zur Längserstreckungsrichtung des Festigkeitsträgerstreifens 1 angeordnet und mit Kautschukmaterial 3 ummantelt sind. Die flachen Festigkeitsträger 2 weisen einen flachen Querschnitt mit h < b auf, wobei die Erstreckungsrichtung der Breite b in etwa parallel zur flächigen Erstreckung des Festigkeitsträgerstreifens 1 ausgerichtet ist. h ist dabei die Höhe und b die Breite des flachen Festigkeitsträgers 2.

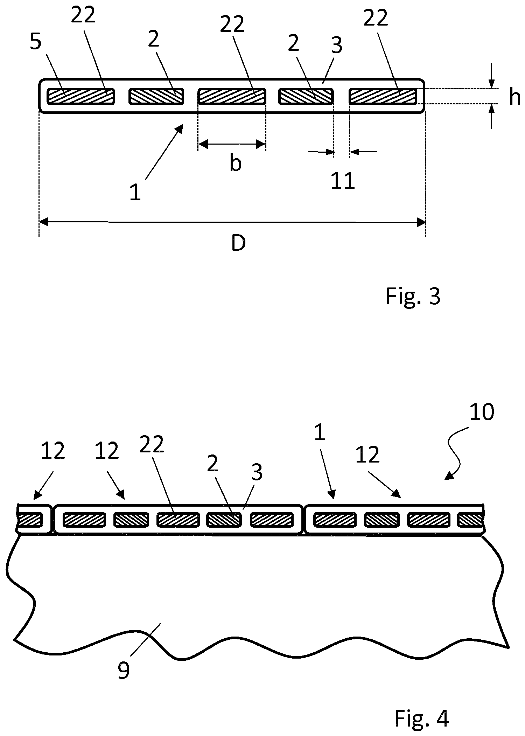

Die flachen Festigkeitsträger 2 des in Fig. 1 dargestellten Festigkeitsträgerstreifens 1 sind alle gleich ausgebildet. Für den Einsatz als Festigkeitsträgerstreifen 1 für eine Festigkeitsträgerlage 10 (siehe Fig. 4) für Fahrzeugluftreifen eignet sich als Material insbesondere Rayon, Polyester, Polyamid, beispielsweise PA 6.6, oder Aramid, beispielsweise para-Aramid oder Hybridmaterialien wie beispielsweise PA 6.6/Aramid. Die flachen Festigkeitsträger 2 können aus einer Folie oder einem zusammenhängenden Fadenbündel 5 (siehe Fig. 3) gebildet sein. Die Feinheit und der Querschnitt der flachen Festigkeitsträger 2 richtet sich nach dem Einsatzzweck und kann in einem sehr weiten Bereich variiert werden. In Frage kommen vor allem flachen Festigkeitsträger 2 mit einer Feinheit von 250 dtex bis 4000 dtex, insbesondere von 940 dtex bis 3000 dtex. In Frage kommen vor allem auch flache Festigkeitsträger 2, deren Höhe h die Bedingung 1 µm < h < 1500 µm, insbesondere 1 µm < h < 350 µm, und/oder deren Breite b die Bedingung 100 µm < b < 15000 µm, insbesondere 500 µm < b < 5000 µm, erfüllt.

Ein solcher Festigkeitsträgerstreifen 1 kann als Vormaterial zur Herstellung einer Festigkeitsträgerlage 10 der Karkasse, der Gürtelbandage, dem Gürtel und dergleichen eines Fahrzeugluftreifens dienen. Im Zuge der Herstellung der Festigkeitsträgerlage 10 wird der Festigkeitsträgerstreifen 1 mit mindestens zwei Windungen 12 um eine Aufbaueinheit 9 gewickelt oder gespult (siehe Fig. 4).

Die Fig. 2 zeigt ein zusammenhängendes Fadenbündel 5 mit einem flachen Querschnitt, das sich als flacher Festigkeitsträger 2 eines erfindungsgemäßen Festigkeitsträgerstreifens 1 eignet. Das zusammenhängende Fadenbündel 5 weist eine Höhe von h = 90 µm und ein Verhältnis Breite b zu Höhe h b/h = 15, d.h. eine Breite von 1350 µm, auf. Das zusammenhängende Fadenbündel 5 enthält als Fäden 6 Endlosfasern aus para-Aramid, welche in etwa parallel zueinander angeordnet und mittels eines vernetzbaren Harzes als Haftvermittler 7 zusammengehalten sind. Der Übersichtlichkeit halber ist in Fig. 2 nur eine geringe Zahl der Fäden 6 dargestellt. Das zusammenhängende Fadenbündel 5 ist mit einem RFL-Dip zur Haftimprägnierung versehen. Ein wie in Fig. 1 dargestellter Festigkeitsträgerstreifen 1, dessen flache Festigkeitsträger 2 derart ausgebildet sind, eignet sich hervorragend zur Herstellung eines Gürtels eines Fahrzeugluftreifens.

Die Fig. 3 zeigt einen Querschnitt eines weiteren im Rahmen der Erfindung einsetzbaren Festigkeitsträgerstreifens 1. Der Festigkeitsträgerstreifen 1 unterscheidet sich von dem in der Fig. 1 dargestellten Festigkeitsträgerstreifen 1 darin, dass er flache Festigkeitsträger 2, 22 aufweist, welche sich in ihrem Material und in ihrem Querschnitt voneinander unterscheiden. Die flachen Festigkeitsträger 2 sind dabei zusammenhängende Fadenbündel 5, welche wie in der Fig. 2 dargestellt ausgebildet sind. Alternierend zu flachen Festigkeitsträgern 2 sind die flachen Festigkeitsträger 22 angeordnet, welche ebenfalls zusammenhängende Fadenbündel 5 sind, deren Fäden 6 aus PA 6.6 gebildet sind und die eine Breite b von 2000 µm aufweisen. Die flachen Festigkeitsträger 2, 22 sind mit einem Abstand 11 von 1000 µm angeordnet. Die Breite D des Festigkeitsträgerstreifens 1 beträgt 10700 µm. Ein solcher Festigkeitsträgerstreifen 1 eignet sich besonders zur Herstellung einer Gürtelbandage eines Fahrzeugluftreifens.

Die Fig. 4 zeigt einen Teilradialschnitt eines Abschnitts einer erfindungsgemäß ausgeführten Festigkeitsträgerlage 10. Der Festigkeitsträgerstreifen 1 ist dabei auf der zum Teil gezeigten Aufbaueinheit 9 gewickelt oder gespult und bildet die Festigkeitsträgerlage 10. Die Aufbaueinheit 9 ist insbesondere eine Bautrommel, auf welcher bereits Reifenbauteile angeordnet sind. Das radial äußerste Bauteil ist dabei der Gürtel, auf welchen der Festigkeitsträgerstreifen 1 gespult oder gewickelt wird. Der Festigkeitsträgerstreifen 1 bildet somit die Festigkeitsträgerlage 10 der Gürtelbandage, welche zumindest den Gürtel mit den Gürtelkanten abdeckt. Die einzelnen Windungen 12 des Festigkeitsträgerstreifens 1 sind in Fig. 4 berührend ohne Abstand angeordnet. Alternativ können die Windungen 12 überlappend oder beabstanded angeordnet sein. Der Festigkeitsträgerstreifen 1 entspricht dem in der Fig. 3 dargestellten Festigkeitsträgerstreifen 1. Alternativ können je zwei benachbarte Windungen 12 die Windungen 12 von unterschiedlichen Festigkeitsträgerstreifen 1 sein.

### Bezugszeichenliste

### (Teil der Beschreibung)

- 1: Festigkeitsträgerstreifen
- 2, 22: flacher Festigkeitsträger
- 3: Kautschukmaterial
- 5: zusammenhängendes Fadenbündel
- 6: Faden
- 7: Haftvermittler
- 9: Aufbaueinheit
- 10: Festigkeitsträgerlage
- 11: Abstand zwischen Festigkeitsträgern eines Festigkeitsträgerstreifens
- 12: Windung
- h: Höhe flacher Festigkeitsträger
- b: Breite flacher Festigkeitsträger
- D: Breite Festigkeitsträgerstreifen

## Patentansprüche

1. Festigkeitsträgerstreifen (1), geeignet um zur Herstellung einer Festigkeitsträgerlage (10) für elastomere Erzeugnisse, insbesondere für Fahrzeugluftreifen, mit mindestens zwei Windungen (12) um eine Aufbaueinheit (9) gewickelt oder gespult zu werden, wobei der Festigkeitsträgerstreifen (1) zwei oder mehr Festigkeitsträger aufweist, welche innerhalb des Festigkeitsträgerstreifens (1) parallel zueinander und parallel zur Längserstreckungsrichtung des Festigkeitsträgerstreifens (1) angeordnet und mit Kautschukmaterial (3) ummantelt sind,
**dadurch gekennzeichnet, dass**
der Festigkeitsträgerstreifen (1) eine Breite (D) von 0,3 mm bis 50 mm, bevorzugt eine Breite (D) von 0,5 mm bis 30 mm, besonders bevorzugt eine Breite (D) von 0,6 mm bis 18 mm, aufweist, wobei zumindest einer der Festigkeitsträger ein flacher Festigkeitsträger (2, 22) ist, wobei der Querschnitt des flachen Festigkeitsträgers (2, 22) die Bedingung h < b erfüllt, wobei h die Höhe des Querschnitts und b die zur Höhe h orthogonale Breite des Querschnitts definiert und dass die Erstreckungsrichtung der Breite b in etwa parallel zur flächigen Erstreckung des Festigkeitsträgerstreifens (1) angeordnet ist.

2. Festigkeitsträgerstreifen (1) nach Anspruch 1, **dadurch gekennzeichnet, dass** alle Festigkeitsträger flache Festigkeitsträger (2, 22) sind.

3. Festigkeitsträgerstreifen (1) nach Anspruch 1 oder 2, **dadurch gekennzeichnet, dass** der flache Festigkeitsträger (2, 22) eine Folie aufweist.

4. Festigkeitsträgerstreifen (1) nach einem oder mehreren der Ansprüche 1 bis 3, **dadurch gekennzeichnet, dass** der flache Festigkeitsträger (2, 22) durch ein zusammenhängendes Fadenbündel (5) gebildet ist, welches eine Vielzahl an Fäden (6) enthält, welche in etwa parallel zur Längserstreckung des flachen Festigkeitsträgers (2, 22) angeordnet sind und mittels eines Haftvermittlers (7) zusammengehalten sind.

5. Festigkeitsträgerstreifen (1) nach einem oder mehreren der Ansprüche 1 bis 4, **dadurch gekennzeichnet, dass** die Höhe h des flachen Festigkeitsträgers (2,22) die Bedingung 1 µm < h < 1500 µm, bevorzugt 1 µm < h < 500 µm, besonders bevorzugt 1 µm < h < 350 µm, erfüllt.

6. Festigkeitsträgerstreifen (1) nach einem oder mehreren der Ansprüche 1 bis 5, **dadurch gekennzeichnet, dass** der flache Festigkeitsträger (2, 22) aus nicht-metallischem Material, bevorzugt aus Polyamid, Polyester, Rayon, Aramid, Polyoxadiazol, Karbon, Glas oder aus Mischungen oder aus Derivaten dieser Materialen, ist.

7. Festigkeitsträgerstreifen (1) nach einem oder mehreren der Ansprüche 1 bis 6, **dadurch gekennzeichnet, dass** der Abstand (11) benachbarter Festigkeitsträger (2, 22) des Festigkeitsträgerstreifens (1) 0,01 mm bis 1,5 mm, bevorzugt 0,04 mm bis 1,2 mm, besonders bevorzugt 0,07 mm bis 0,8 mm, beträgt.

8. Festigkeitsträgerstreifen (1) nach einem oder mehreren der Ansprüche 1 bis 7, **dadurch gekennzeichnet, dass** der Festigkeitsträgerstreifen (1) 2 bis 25, bevorzugt 2 bis 18, besonders bevorzugt 2 bis 8, flache Festigkeitsträger (2, 22) aufweist.

9. Festigkeitsträgerstreifen (1) nach einem oder mehreren der Ansprüche 1 bis 8, **dadurch gekennzeichnet, dass** der Festigkeitsträgerstreifen (1) zumindest zwei Festigkeitsträger (2, 22) aufweist, die sich voneinander unterscheiden, bevorzugt die sich in ihrem Material und/oder in ihrem Aufbau und/oder in ihrem Querschnitt unterscheiden.

10. Festigkeitsträgerlage (10) für elastomere Erzeugnisse, insbesondere für Fahrzeugluftreifen, aufweisend einen Festigkeitsträgerstreifen (1) gemäß einem oder mehreren der Ansprüche 1 bis 9, welcher zur Herstellung der Festigkeitsträgerlage (10) mit mindestens zwei Windungen (12) um eine Aufbaueinheit (9) gewickelt oder gespult ist.

11. Fahrzeugluftreifen in Radialbauart mit einem Laufstreifen, einem mehrlagigen Gürtel, einer Gürtelbandage, einer Karkasse und Wulstbereichen, **dadurch gekennzeichnet, dass** der Gürtel und / oder die Gürtelbandage und / oder die Karkasse, bevorzugt die Gürtelbandage, eine Festigkeitsträgerlage (10) gemäß Anspruch 10 aufweist.

## Claims

1. Reinforcing strip (1), suitable for being wrapped or wound with at least two turns (12) around a building-up unit (9) to produce a reinforcing ply (10) for elastomeric products, in particular for pneumatic vehicle tyres, the reinforcing strip (1) comprising two or more reinforcing elements, which are arranged parallel to one another and parallel to the direction of the longitudinal extent of the reinforcing strip (1) within the reinforcing strip (1) and are sheathed with rubber material (3), **characterized in that**
the reinforcing strip (1) has a width (D) of 0.3 mm to 50 mm, preferably a width (D) of 0.5 mm to 30 mm, particularly preferably a width (D) of 0.6 mm to 18 mm, at least one of the reinforcing elements being a flat reinforcing element (2, 22), the cross section of the flat reinforcing element (2, 22) satisfying the condition h < b, where h is the height of the cross section and b defines the width of the cross section orthogonal to the height h,
and **in that** the direction of extent of the width b is arranged approximately parallel to the two-dimensional extent of the reinforcing strip (1).

2. Reinforcing strip (1) according to Claim 1, **characterized in that** all of the reinforcing elements are flat reinforcing elements (2, 22).

3. Reinforcing strip (1) according to Claim 1 or 2, **characterized in that** the flat reinforcing element (2, 22) comprises a film.

4. Reinforcing strip (1) according to one or more of Claims 1 to 3, **characterized in that** the flat reinforcing element (2, 22) is formed by a coherent bundle of filaments (5), which contains a multiplicity of filaments (6), which are arranged approximately parallel to the longitudinal extent of the flat reinforcing element (2, 22) and are held together by means of a bonding agent (7).

5. Reinforcing strip (1) according to one or more of Claims 1 to 4, **characterized in that** the height h of the flat reinforcing element (2, 22) satisfies the condition 1 µm < h < 1500 µm, preferably 1 µm < h < 500 µm, particularly preferably 1 µm < h < 350 µm.

6. Reinforcing strip (1) according to one or more of Claims 1 to 5, **characterized in that** the flat reinforcing element (2, 22) is made of nonmetallic material, preferably of polyamide, polyester, rayon, aramid, polyoxadiazole, carbon, glass or mixtures or derivatives of these materials.

7. Reinforcing strip (1) according to one or more of Claims 1 to 6, **characterized in that** the spacing (11) between adjacent reinforcing elements (2, 22) of the reinforcing strip (1) is 0.01 mm to 1.5 mm, preferably 0.04 mm to 1.2 mm, particularly preferably 0.07 mm to 0.8 mm.

8. Reinforcing strip (1) according to one or more of Claims 1 to 7, **characterized in that** the reinforcing strip (1) comprises 2 to 25, preferably 2 to 18, particularly preferably 2 to 8, flat reinforcing elements (2, 22).

9. Reinforcing strip (1) according to one or more of Claims 1 to 8, **characterized in that** the reinforcing strip (1) comprises at least two reinforcing elements (2, 22), which differ from one another, preferably which differ in their material and/or in their construction and/or in their cross section.

10. Reinforcing ply (10) for elastomeric products, in particular for pneumatic vehicle tyres, comprising a reinforcing strip (1) according to one or more of Claims 1 to 9, which is wrapped or wound with at least two turns (12) around a building-up unit (9) to produce the reinforcing ply (10).

11. Pneumatic vehicle tyre of a radial type of construction with a tread, a multi-ply breaker belt, a belt bandage, a carcass and bead regions, **characterized in that** the breaker belt and/or the belt bandage and/or the carcass, preferably the belt bandage, comprises a reinforcing ply (10) according to Claim 10.

## Revendications

1. Ruban (1) de renforts convenant pour réaliser une couche (10) de renforts pour produits en élastomère, en particulier pour bandages pneumatiques pour roue de véhicule, et présentant au moins deux enroulements (12) destinés à être enroulés ou bobinés autour d'une unité de montage (9),
le ruban (1) de renforts présentant deux ou plusieurs renforts disposés à l'intérieur du ruban (1) de renforts parallèlement les uns aux autres et parallèlement à la direction d'extension longitudinale du ruban (1) de renforts et entourés d'un matériau de caoutchouc (3),
**caractérisé en ce que**
le ruban (1) de renforts présente une largeur (D) de 0,3 mm à 50 mm, de préférence une largeur (D) de 0,5 mm à 30 mm et de façon particulièrement préférable une largeur (D) de 0,6 mm à 18 mm,
**en ce qu'**au moins l'un des renforts est un renfort plat (2, 22), la section transversale du renfort plat (2, 22) respectant la condition h < b, h étant la hauteur de la section transversale et b la largeur orthogonale à la hauteur h de la section transversale et
**en ce que** la direction d'extension de la largeur b est disposée sensiblement en parallèle à l'extension plate du ruban (1) de renforts.

2. Ruban (1) de renforts selon la revendication 1, **caractérisé en ce que** tous les renforts sont des renforts plats (2, 22).

3. Ruban (1) de renforts selon les revendications 1 ou 2, **caractérisé en ce que** le renfort plat (2, 22) présente une feuille.

4. Ruban (1) de renforts selon l'une ou plusieurs des revendications 1 à 3, **caractérisé en ce que** le renfort plat (2, 22) est formé par un faisceau continu (5) de fils qui contient plusieurs fils (6) disposés sensiblement en parallèle à l'extension longitudinale du renfort plat (2, 22) et maintenus ensemble au moyen d'un adhésif (7).

5. Ruban (1) de renforts selon l'une ou plusieurs des revendications 1 à 4, **caractérisé en ce que** la hauteur h du renfort plat (2, 22) répond à la condition 1 µm < h < 1 500 µm, de préférence 1 µm < h < 500 µm et de façon particulièrement préférable 1 µm < h 300 µm.

6. Ruban (1) de renforts selon l'une ou plusieurs des revendications 1 à 5, **caractérisé en ce que** le renfort plat (2, 22) est réalisé en un matériau non métallique, de préférence en polyamide, polyester, rayonne, aramide, polyoxadiazole, carbone, verre ou en mélanges ou dérivés de ces matériaux.

7. Ruban (1) de renforts selon l'une ou plusieurs des revendications 1 à 6, **caractérisé en ce que** la distance (11) entre des renforts plats (2, 22) voisins du ruban (1) de renforts est comprise entre 0,01 mm et 1,5 mm, de préférence entre 0,04 mm et 1,2 mm et de façon particulièrement préférable entre 0,07 mm et 0,8 mm.

8. Ruban (1) de renforts selon l'une ou plusieurs des revendications 1 à 7, **caractérisé en ce que** le ruban (1) de renforts présente de 2 à 25, de préférence de 2 à 18 et de façon particulièrement préférable de 2 à 8 renforts plats (2, 22).

9. Ruban (1) de renforts selon l'une ou plusieurs des revendications 1 à 8, **caractérisé en ce que** le ruban (1) de renforts présente au moins deux renforts plats (2) qui se distinguent l'un de l'autre, de préférence par leur matériau, leur structure et/ou leur section transversale.

10. Couche de renforts (10) pour produits en élastomère, en particulier pour bandages pneumatiques pour roue de véhicule, présentant un ruban (1) de renforts selon l'une ou plusieurs des revendications 1 à 9, pour réaliser une couche (10) de renforts présentant au moins deux enroulements (12) destinés à être enroulés ou bobinés autour d'une unité de montage (9).

11. Bandage pneumatique pour roue de véhicule à structure radiale, présentant une bande de roulement, une ceinture en plusieurs couches, un bandage de ceinture, une carcasse et des parties formant bourrelet, **caractérisé en ce que** la ceinture, le bandage de ceinture et/ou la carcasse, mais de préférence le bandage de ceinture, présentent une couche (10) de renforts selon la revendication 10.
